# EUROPEAN PATENT APPLICATION

(11) **EP 2 923 805 A2**
(43) Date of publication of application: **30.09.2015**
(21) Application number: 15160430.3
(22) Date of filing: 24.03.2015
(51) Int. Cl.: B25J 9/16

(54) **Object manipulation driven robot offline programming for multiple robot system**

(30) Priority: 26.03.2014 US 201414226403
(71) Applicant: Siemens Industry Software Ltd., 7019900 Airport City (IL)
(72) Inventor: Madvil, Rahav, 75234 Rishon Lezion (IL); Hazan, Moshe, 40800 Elad (IL); Barak, Guy, 75474 Rishon Le-Zion (IL)
(74) Representative: Isarpatent

(57) **Abstract**

Methods for product simulation systems and computer-readable mediums. A method includes receiving (302) inputs including one or more virtual robots (202), one or more virtual work objects (210), and a virtual workspace (224). The method includes determining (404) a path (218) for each of the virtual robots (202) based on the virtual work objects (210) and the virtual workspace (224). The method includes generating (408) programs (222) that can be collision-free for one or more actual robots respectively corresponding to the virtual robots (202) based on the paths (218).

## Description

### TECHNICAL FIELD

The present disclosure is directed, in general, to computer-aided design, visualization, and manufacturing systems, product lifecycle management ("PLM") systems, product data management ("PDM") systems, and similar systems, that manage data for products and other items (collectively, "Product Data Management" systems or PDM systems).

### BACKGROUND OF THE DISCLOSURE

PDM systems manage PLM and other data. Improved systems are desirable.

### SUMMARY OF THE DISCLOSURE

Various disclosed embodiments include simulation methods and corresponding systems and computer-readable mediums. A method includes receiving inputs including one or more virtual robots, one or more virtual work objects, and a virtual workspace. The method includes determining a path for each of the virtual robots based on the virtual work objects and the virtual workspace. The method includes generating programs that can be collision-free for one or more actual robots respectively corresponding to the virtual robots based on the paths.

The foregoing has outlined rather broadly the features and technical advantages of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiment disclosed as a basis for modifying or designing other structures for carrying out the same purposes of the present disclosure. Those skilled in the art will also realize that such equivalent constructions do not depart from the spirit and scope of the disclosure in its broadest form.

Before undertaking the DETAILED DESCRIPTION below, it may be advantageous to set forth definitions of certain words or phrases used throughout this patent document: the terms "include" and "comprise," as well as derivatives thereof, mean inclusion without limitation; the term "or" is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, whether such a device is implemented in hardware, firmware, software or some combination of at least two of the same. It should be noted that the functionality associated with any particular controller may be centralized or distributed, whether locally or remotely. Definitions for certain words and phrases are provided throughout this patent document, and those of ordinary skill in the art will understand that such definitions apply in many, if not most, instances to prior as well as future uses of such defined words and phrases. While some terms may include a wide variety of embodiments, the appended claims may expressly limit these terms to specific embodiments.

### BRIEF DESCRIPTION OF THE DRAWINGS

For a more complete understanding of the present disclosure, and the advantages thereof, reference is now made to the following descriptions taken in conjunction with the accompanying drawings, wherein like numbers designate like objects, and in which:
Figure 1 illustrates a block diagram of a data processing system in which an embodiment can be implemented;
Figure 2 illustrates information in a storage device in accordance with disclosed embodiments;
Figure 3 illustrates a flowchart of a process in accordance with disclosed embodiments; and
Figure 4 illustrates a flowchart of a process in accordance with disclosed embodiments.

### DETAILED DESCRIPTION

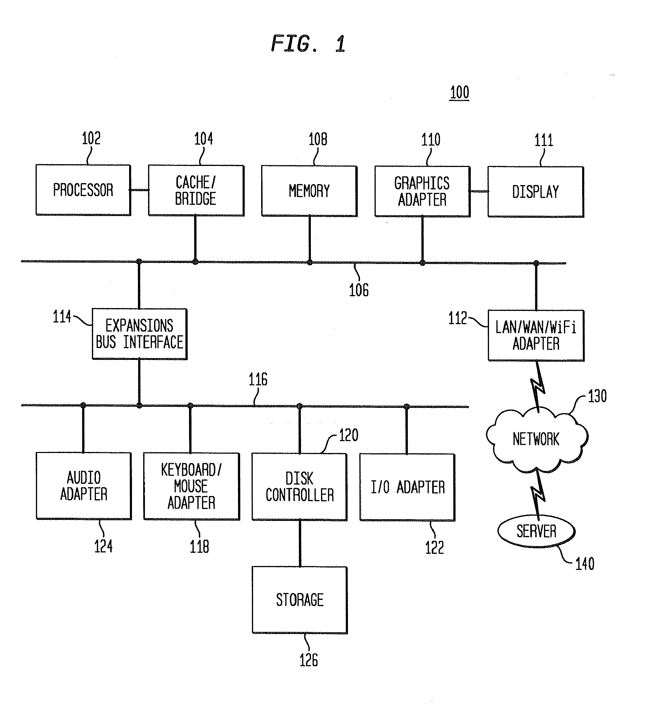

FIGURES 1 through 4, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged device. The numerous innovative teachings of the present application will be described with reference to exemplary non-limiting embodiments.

The trend of dual arm robots is rising and becoming increasingly popular. Robot programming becomes much more complex with dual arm robots, since the work object being worked by the robots is carried or handled simultaneously by two or more robots or two or more robotic arms. The work object can include an object being worked on by one or more robots and can include any other object within the workspace of the robots that the robots should not collide with.

In material handling and assembly processes, robots can be required to manipulate an object and move the object from one precise position to another (with or without additional action on the object). When programming the robots handling the work object, the user has to know where the tool center points ("TCPs") of the robots are and write programs based on the TCPs of the robots. Instead of developing and describing the paths of the TCPs, it can be more natural to describe directly the manipulation of the work object using the work object itself as the frame of reference rather than the frames of reference of the TCPs (also referred to as TCP frames or "TCPFs") of each of the robots. Having additional robots greatly increases the complexity of developing the programs for the robots to manipulate the work object. To simplify programming the one or more robots handling the work object, embodiments in accordance with this disclosure provide for manipulating the work object directly via user inputs and generating corresponding programs based on the manipulations of the work object.

Embodiments according to this disclosure provide a method of offline robot programming via work object manipulation, which simplifies the process of programming the robots handling the work object. The method can include the manipulation of robots and robotic path creation in a virtual environment where a user can manipulate the work object in order to create the programs for the one or more robots handling the work object. Embodiments of this disclosure are applicable for dual arm robots, but not limited to such configuration and can be applied to systems including more than two robots or robotic arms.

Embodiments according to the disclosure receive inputs including virtual robots and virtual work objects. User inputs define the attached location of TCPs for the robots to work on the work object. A user can manipulate the virtual work object in a virtual space and appropriate programs for all involved robots can be generated from the manipulations of the work object.

Embodiments according to the disclosure also support master/slave configurations of robots, including when only one robot is defined as a Master. The master/slave approach is supported by some robot vendors wherein a system includes one master robot that gets a program and one or more slave robots that follow the program of the master robot.

Before the manipulation of the work object, the robot arms can be placed in the way they are expected to hold the object by attaching the TCP of the robots to defined locations of the work object. In the virtual environment, the robots can track the motion of the work object and the application can translate the motion of the work object and the attached TCPs to a robotic path for each robot. The robotic path can be translated into a program for each robot. All involved robots can track the work object as it is manipulated and can verify that each robot can reach the appropriate target location via a motion that is free of collisions. During the object tracking motion, each robot's TCP can be maintained relative to the position of the work object.

Once the robot paths are created, the system can verify that all the robot paths are collision free. The system can use a realistic robot simulation (RRS) to simulate the movements of the actual robots on the shop floor. If a collision is found, the system can resolve the collision using various approaches enumerated here, but not limited to, including: 1) changing the robot configuration, i.e., the robot will reach to the same target location using a different configuration of the joints of the robot; 2) rotating the target location around its normal vector; 3) using the methods disclosed in U.S. Patent Application No. 12/971,020 for "METHOD AND APPARATUS FOR INDUSTRIAL ROBOTIC PATHS CYCLE TIME OPTIMIZATION USING FLY-BY", which is hereby incorporated by reference herein; and so on.

Embodiments in accordance with this disclosure make offline programming of robots more intuitive and hence reduce the required time for offline programming. This benefit can be amplified by the fact that the offline programming can be done simultaneously for more than one robotic arm. Methods according to the disclosure provide a collision free path, without the need to stop the actual robots from working, which can be performed in less time via less skilled offline programmers that lead to dramatically lower costs.

Figure 1 illustrates a block diagram of a data processing system in which an embodiment can be implemented, for example as a PDM system particularly configured by software or otherwise to perform the processes as described herein, and in particular as each one of a plurality of interconnected and communicating systems as described herein. The data processing system illustrated includes a processor 102 connected to a level two cache/bridge 104, which is connected in turn to a local system bus 106. Local system bus 106 may be, for example, a peripheral component interconnect (PCI) architecture bus. Also connected to local system bus in the illustrated example are a main memory 108 and a graphics adapter 110. The graphics adapter 110 may be connected to display 111.

Other peripherals, such as local area network (LAN) / Wide Area Network / Wireless (e.g. WiFi) adapter 112, may also be connected to local system bus 106. Expansion bus interface 114 connects local system bus 106 to input/output (I/O) bus 116. I/O bus 116 is connected to keyboard/mouse adapter 118, disk controller 120, and I/O adapter 122. Disk controller 120 can be connected to a storage 126, which can be any suitable machine usable or machine readable storage medium, including but not limited to nonvolatile, hard-coded type mediums such as read only memories (ROMs) or erasable, electrically programmable read only memories (EEPROMs), magnetic tape storage, and user-recordable type mediums such as floppy disks, hard disk drives and compact disk read only memories (CD-ROMs) or digital versatile disks (DVDs), and other known optical, electrical, or magnetic storage devices.

Also connected to I/O bus 116 in the example shown is audio adapter 124, to which speakers (not shown) may be connected for playing sounds. Keyboard/mouse adapter 118 provides a connection for a pointing device (not shown), such as a mouse, trackball, trackpointer, touchscreen, etc.

Those of ordinary skill in the art will appreciate that the hardware illustrated in Figure 1 may vary for particular implementations. For example, other peripheral devices, such as an optical disk drive and the like, also may be used in addition or in place of the hardware illustrated. The illustrated example is provided for the purpose of explanation only and is not meant to imply architectural limitations with respect to the present disclosure.

A data processing system in accordance with an embodiment of the present disclosure includes an operating system employing a graphical user interface. The operating system permits multiple display windows to be presented in the graphical user interface simultaneously, with each display window providing an interface to a different application or to a different instance of the same application. A cursor in the graphical user interface may be manipulated by a user through the pointing device. The position of the cursor may be changed and/or an event, such as clicking a mouse button, generated to actuate a desired response.

One of various commercial operating systems, such as a version of Microsoft Windows™, a product of Microsoft Corporation located in Redmond, Wash, may be employed if suitably modified. The operating system is modified or created in accordance with the present disclosure as described.

LAN/ WAN/Wireless adapter 112 can be connected to a network 130 (not a part of data processing system 100), which can be any public or private data processing system network or combination of networks, as known to those of skill in the art, including the Internet. Data processing system 100 can communicate over network 130 with server system 140, which is also not part of data processing system 100, but can be implemented, for example, as a separate data processing system 100.

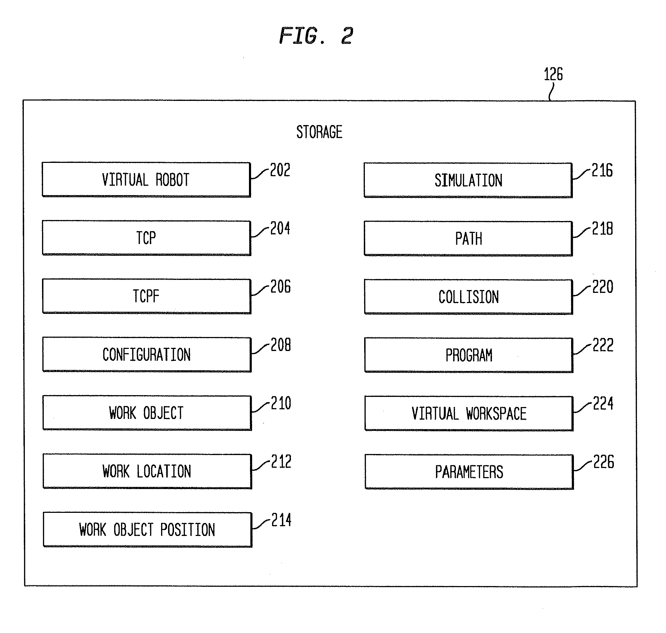

Figure 2 illustrates information in a storage device in accordance with disclosed embodiments. The storage 126 of the data processing system of Figure 1 includes one or more types and pieces of data and information, such as one or more virtual robots 202, TCPs 204, TCPFs 206, configurations 208, work objects 210, work locations 212, work object positions 214, simulations 216, paths 218, collisions 220, programs 222, virtual workspace 224, and so on.

The virtual robots 202 can be virtual representations of actual robots and can be used to plan, prepare, simulate, and develop the programs used to run the actual robots. Each robot, as well as its virtual counterpart, has a tool center point ("TCP") 204 that can be the mathematical point of the location of the tool attached to the robot. The TCP can also be referred to as the location of the robot. The frame of reference associated with the TCP can be referred to as the TCP frame ("TCPF") 206. Each robot includes one or more joints used to position the TCP of the robot at different locations within the virtual workspace 224. For each location of the robot, there can be multiple joint settings, referred to as configurations 208, to position the TCP 204 at a location. Each virtual robot 202 has a position that can be independent from its location, where the position refers to the position of the base of the robot and the location refers to the location of the tool at the end of the robot opposite from the base of the robot.

The virtual work objects 210 can be virtual representations of actual work objects that can be worked on by actual robots and are positioned within the virtual workspace 224. Each virtual work object 210 includes or can be associated with one or more work locations 212 that correspond to work locations on an actual work object. Each work location 212 can be a location on a virtual work object 210 to which a TCP 204 can be attached to simulate an actual work object being manipulated by an actual robot via the work location. Each virtual work object 210 includes or can be associated with a work object position 214 that identifies the position of the virtual work object with respect to the virtual workspace 224. The virtual work object 210 corresponds to an actual work object, such as a panel of an airplane or an automobile, which can be worked on, handled, moved, or rotated by the robots. Each virtual work object 210 has a position that can be independent from its locations, where the position refers to the position of the work object and the location refers to the location on the work object to which the TCPs of the virtual robots can be attached.

The simulation 216 can be an RRS simulation that can simulate movements of the robots along the created paths and/or manipulation of one or more of the virtual work objects 210 via one or more of the virtual robots 202. The simulation 216 can be based on the paths 218. The paths 218 include paths of the virtual robots 202 and paths of the virtual work objects 210. A path of a virtual robot can be based on and derived from the path of a virtual work object. The path of a virtual robot can be the path the TCP of the robot follows and can be a list of target locations that the TCPF of the robot should reach. The path of the work object can be the path the work object position follows. The paths of the virtual robots can be determined based on the path of a virtual work object. The simulation 216 tests for collisions 220 created by the paths 218 of the virtual robots 202. The collisions 220 can be unintended collisions between a respective virtual robot 202 and something else in the workspace 224, such as another robot, the work object, another object in the environment, and so on.

The virtual workspace 224 can include the virtual robots 202 and the virtual work objects 210. The virtual workspace 224 can include any object around the virtual robots 202 that the virtual robots 202 should not collide with. Objects that robots need to avoid within the workspace and simulated within the virtual workspace 224 can include fences, a floor, other robots, other static objects around the robots, and so on.

Each of the programs 222 can include the instructions and commands necessary to perform work on an actual work object by an actual robot. Each program 222 can be created from a corresponding path 218 that can be free of collisions 220. Each program 222 includes one or more of positions, speeds, accelerations, motions, commands, instructions, and so on to control movement of an actual robot.

The parameters 226 can be provided by the simulation program in relation to the virtual robots 202. The parameters 226 can include positions, locations, speeds, accelerations, motions, rotations, and so on from which instructions and commands of the programs 222 can be generated to control the actual robots.

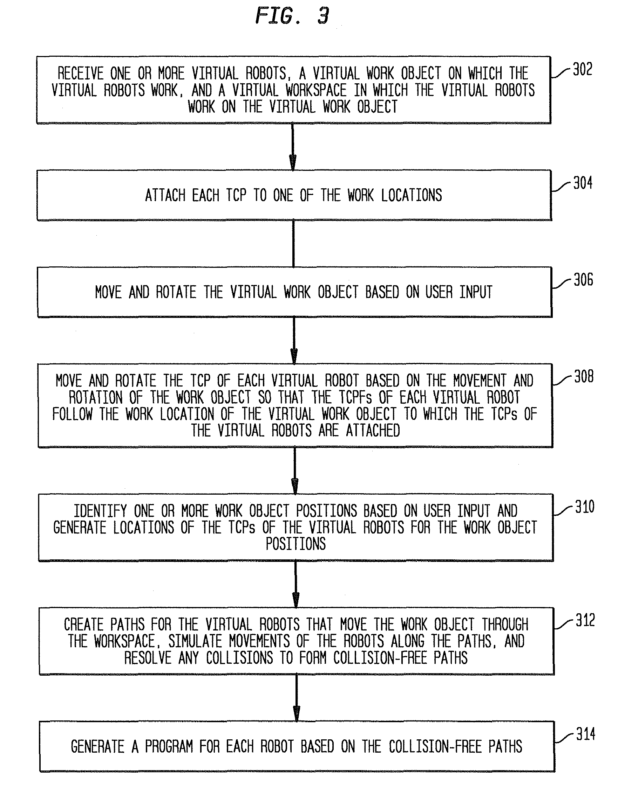

Figure 3 illustrates a flowchart of a process in accordance with disclosed embodiments that may be performed, for example, by one or more PLM or PDM systems such as data processing system 100, referred to generically below as the "system."

The system receives one or more virtual robots, a virtual work object on which the virtual robots work and a virtual workspace in which the virtual robots work on the virtual work object (step 302). A user defines one or more work locations on the work object for each tool center point (TCP) of each virtual robot. The work locations can be defined by directly identifying the location on the virtual work object or by dragging a TCP of a virtual robot to the work location on the virtual work object.

The system attaches each TCP to one of the work locations (step 304). When the TCP is attached to the work location, the TCP can move with the work location. The work location moves as the virtual work object is manipulated by a user.

The system moves and rotates the virtual work object based on user input (step 306). As the virtual work object moves and rotates, the TCPs attached to the work locations on the virtual work object also move and rotate to maintain the attachment between the TCPs and the work locations.

The system moves and rotates the TCP of each virtual robot based on the movement and rotation of the work object so that the TCPFs of each virtual robot follows the work location of the virtual work object to which the TCPs of the virtual robots can be attached (step 308).

The system identifies one or more work object positions based on user input and generates locations of the TCPs of the virtual robots for the work object positions (step 310). The work object positions can be identified by a user and using a graphical user interface.

The system can create paths for the virtual robots that move the work object through the workspace, simulate movements of the robots along the paths, and resolve any collisions to form collision-free paths (step 312). Collisions can be removed by one or more of changing a configuration of the virtual robots, rotating a location of a TCP about a normal axis of the TCP, adding one or more flyby positions through which the TCP of a virtual robot or the work object passes, and so on. One way to add one or more flyby positions is via the methods disclosed in U.S. Patent Publication 2011/0153080 A1, which is hereby incorporated by reference. The simulation program receives the virtual robots, the virtual work object, and the work object positions.

The system generates a program for each robot based on the collision-free paths (step 314). The program can be generated while the actual robot is offline or while the actual robot is online performing other tasks to reduce any downtime associated with developing the program.

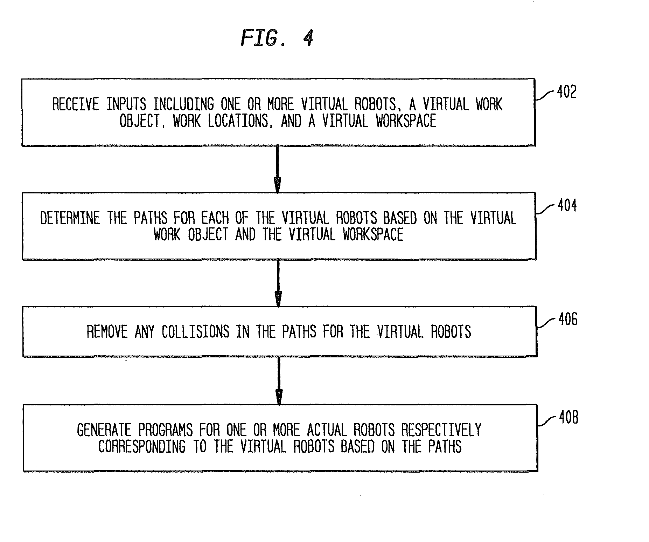

Figure 4 illustrates a flowchart of a process in accordance with disclosed embodiments that may be performed, for example, by one or more PLM or PDM systems such as data processing system 100, referred to generically below as the "system."

The system receives inputs including one or more virtual robots, one or more virtual work objects, work locations, and a virtual workspace (step 402). The virtual workspace can include all the objects the virtual robot should not collide with and can simulate the workspace in which the robots work on the work objects. The inputs can be received, loaded, and processed by the simulation program running on the system. One or more of the processor 102, the memory 108, and the simulation program running on the processor 102 receive the inputs via one or more of the local system bus 106, the adapter 112, the network 130, the server 140, the interface 114, the I/O bus 116, the disk controller 120, the storage 126, and so on. Receiving, as used herein, can include retrieving from storage, receiving from another device or process, receiving via an interaction with a user, or otherwise.

The system determines the paths for each of the virtual robots based on the virtual work object and the virtual workspace (step 404). The path of the virtual work object can be created from the virtual workspace and/or one or more work object positions. The paths for the virtual robots can be created via work locations to which TCPs of the virtual robots can be attached. The work locations can be transformed by the work object positions so that the TCPs of the virtual robots follow the work locations along paths that allow actual robots corresponding to the virtual robots to manipulate an actual work object corresponding to the virtual work object in an actual workspace that corresponds to the virtual workspace.

The system removes any collisions in the paths for the virtual robots (step 406). Collisions related to a path of a virtual robot that can be detected via the simulation program can be removed by one or more of changing a configuration of a virtual robot, rotating a location of a TCP about a normal axis of the TCP, and adding one or more flyby positions through which the TCP of a virtual robot or the work object passes. All collisions can be removed so that each virtual robot has a collision-free path for manipulating the work object within the workspace.

The system generates programs for one or more actual robots respectively corresponding to the virtual robots based on the paths (step 408). The simulation program provides multiple parameters including positions, locations, speeds, accelerations, motions, rotations, and so on from which instructions and commands of the programs to control the actual robots can be generated. The programs can be transmitted to actual robots that correspond to the virtual robots.

Of course, those of skill in the art will recognize that, unless specifically indicated or required by the sequence of operations, certain steps in the processes described above may be omitted, performed concurrently or sequentially, or performed in a different order.

Those skilled in the art will recognize that, for simplicity and clarity, the full structure and operation of all data processing systems suitable for use with the present disclosure is not being illustrated or described herein. Instead, only so much of a data processing system as is unique to the present disclosure or necessary for an understanding of the present disclosure is illustrated and described. The remainder of the construction and operation of data processing system 100 may conform to any of the various current implementations and practices known in the art.

It is important to note that while the disclosure includes a description in the context of a fully functional system, those skilled in the art will appreciate that at least portions of the mechanism of the present disclosure are capable of being distributed in the form of instructions contained within a machine-usable, computer-usable, or computer-readable medium in any of a variety of forms, and that the present disclosure applies equally regardless of the particular type of instruction or signal bearing medium or storage medium utilized to actually carry out the distribution. Examples of machine usable/readable or computer usable/readable mediums include: nonvolatile, hard-coded type mediums such as read only memories (ROMs) or erasable, electrically programmable read only memories (EEPROMs), and user-recordable type mediums such as floppy disks, hard disk drives and compact disk read only memories (CD-ROMs) or digital versatile disks (DVDs).

Although an exemplary embodiment of the present disclosure has been described in detail, those skilled in the art will understand that various changes, substitutions, variations, and improvements disclosed herein may be made without departing from the spirit and scope of the disclosure in its broadest form.

None of the description in the present application should be read as implying that any particular element, step, or function is an essential element which must be included in the claim scope: the scope of patented subject matter is defined only by the allowed claims. Moreover, none of these claims are intended to invoke paragraph six of 35 USC §112 unless the exact words "means for" are followed by a participle.

Further embodiments
1. A method for product data management, the method performed by a data processing system (100) and comprising:
   receiving (302) inputs including one or more virtual robots (202), one or more virtual work objects (210), and a virtual workspace (224);
   determining (404) a path (218) for each of the virtual robots (202) based on the virtual work objects (210) and the virtual workspace (224); and
   generating (408) programs (222) for one or more actual robots respectively corresponding to the virtual robots (202) based on the paths (218).
2. The method of embodiment 1, wherein one or more collisions (220) in the paths (218) for the virtual robots (202) are removed.
3. The method of embodiment 2, wherein the collisions (220) are removed by one or more of changing a configuration (208) of a virtual robot (202), rotating a location of a tool center point (TCP) (204) of the virtual robot (202) about a normal axis of the TCP (204), and adding one or more flyby positions through which the TCP (204) of the virtual robot (202) passes.
4. The method of embodiment 1, wherein the path (218) for a virtual robot (202) is created via a work location (212) to which a tool center point (TCP) (204) of the virtual robot (202) is attached.
5. The method of embodiment 4, wherein the work location (212) is transformed by one or more work object positions (214) so that the TCP (204) of the virtual robot (202) follows the work locations (212) along a path (218) that allows an actual robot corresponding to the virtual robot (202) to manipulate actual work objects corresponding to the virtual work objects (210).
6. The method of embodiment 1, wherein one or more parameters (226) including positions, locations, speeds, accelerations, motions, and rotations are provided from which instructions and commands of the programs (222) to control the actual robots are generated.
7. The method of embodiment 1, wherein the programs (222) are generated while the actual robots are offline.
8. A data processing system (100) comprising:
   a processor (102); and
   an accessible memory (108), the data processing system (100) particularly configured to
      receive (302) inputs including one or more virtual robots (202), one or more virtual work objects (210), and a virtual workspace (224);
      determine (404) a path (218) for each of the virtual robots (202) based on the virtual work objects (210) and the virtual workspace (224); and
      generate (408) programs (222) for one or more actual robots respectively corresponding to the virtual robots (202) based on the paths (218).
9. The data processing system (100) of embodiment 8, wherein one or more collisions (220) in the paths (218) for the virtual robots (202) are removed.
10. The data processing system (100) of embodiment 9, wherein the collisions (220) are removed by one or more of changing a configuration (208) of a virtual robot (202), rotating a location of a tool center point (TCP) (204) of the virtual robot (202) about a normal axis of the TCP (204), and adding one or more flyby positions through which the TCP (204) of the virtual robot (202) passes.
11. The data processing system (100) of embodiment 8, wherein the path (218) for a virtual robot (202) is created via a work location (212) to which a tool center point (TCP) (204) of the virtual robot (202) is attached.
12. The data processing system (100) of embodiment 11, wherein the work location (212) is transformed by one or more work object positions (214) so that the TCP (204) of the virtual robot (202) follows the work locations (212) along a path (218) that allows an actual robot corresponding to the virtual robot (202) to manipulate actual work objects corresponding to the virtual work objects (210).
13. The data processing system (100) of embodiment 8, wherein one or more parameters (226) including positions, locations, speeds, accelerations, motions, and rotations are provided from which instructions and commands of the programs (222) to control the actual robots are generated.
14. The data processing system (100) of embodiment 8, wherein the programs (222) are generated while the actual robots are offline.
15. A non-transitory computer-readable medium encoded with executable instructions that, when executed, cause one or more data processing systems (100) to:
   receive (302) inputs including one or more virtual robots (202), one or more virtual work objects (210), and a virtual workspace (224);
   determine (404) a path (218) for each of the virtual robots (202) based on the virtual work objects (210) and the virtual workspace (224); and
   generate (408) programs (222) for one or more actual robots respectively corresponding to the virtual robots (202) based on the paths (218).
16. The computer-readable medium of embodiment 15, wherein one or more collisions (220) in the paths (218) for the virtual robots (202) are removed.
17. The computer-readable medium of embodiment 16, wherein the collisions (220) are removed by one or more of changing a configuration (208) of a virtual robot (202), rotating a location of a tool center point (TCP) (204) of the virtual robot (202) about a normal axis of the TCP (204), and adding one or more flyby positions through which the TCP (204) of the virtual robot (202) passes.
18. The computer-readable medium of embodiment 15, wherein the path (218) for a virtual robot (202) is created via a work location (212) to which a tool center point (TCP) (204) of the virtual robot (202) is attached.
19. The computer-readable medium of embodiment 18, wherein the work location (212) is transformed by one or more work object positions (214) so that the TCP (204) of the virtual robot (202) follows the work locations (212) along a path (218) that allows an actual robot corresponding to the virtual robot (202) to manipulate actual work objects corresponding to the virtual work objects (210).
20. The computer-readable medium of embodiment 15, wherein one or more parameters (226) including positions, locations, speeds, accelerations, motions, and rotations are provided from which instructions and commands of the programs (222) to control the actual robots are generated and wherein the programs (222) are generated while the actual robots are offline.

## Claims

1. A method for product data management, the method performed by a data processing system (100) and comprising:
receiving (302) inputs including one or more virtual robots (202), one or more virtual work objects (210), and a virtual workspace (224);
determining (404) a path (218) for each of the virtual robots (202) based on the virtual work objects (210) and the virtual workspace (224); and
generating (408) programs (222) for one or more actual robots respectively corresponding to the virtual robots (202) based on the paths (218).

2. The method of claim 1, wherein one or more collisions (220) in the paths (218) for the virtual robots (202) are removed.

3. The method of claim 2, wherein the collisions (220) are removed by one or more of changing a configuration (208) of a virtual robot (202), rotating a location of a tool center point (TCP) (204) of the virtual robot (202) about a normal axis of the TCP (204), and adding one or more flyby positions through which the TCP (204) of the virtual robot (202) passes.

4. The method according to any of the preceding claims, wherein the path (218) for a virtual robot (202) is created via a work location (212) to which a tool center point (TCP) (204) of the virtual robot (202) is attached.

5. The method of claim 4, wherein the work location (212) is transformed by one or more work object positions (214) so that the TCP (204) of the virtual robot (202) follows the work locations (212) along a path (218) that allows an actual robot corresponding to the virtual robot (202) to manipulate actual work objects corresponding to the virtual work objects (210).

6. The method according to any of the preceding claims, wherein one or more parameters (226) including positions, locations, speeds, accelerations, motions, and rotations are provided from which instructions and commands of the programs (222) to control the actual robots are generated.

7. The method of according to any of the preceding claims, wherein the programs (222) are generated while the actual robots are offline.

8. A data processing system (100) comprising:
a processor (102); and
an accessible memory (108), the data processing system (100) particularly configured to
receive (302) inputs including one or more virtual robots (202), one or more virtual work objects (210), and a virtual workspace (224);
determine (404) a path (218) for each of the virtual robots (202) based on the virtual work objects (210) and the virtual workspace (224); and
generate (408) programs (222) for one or more actual robots respectively corresponding to the virtual robots (202) based on the paths (218).

9. The data processing system of claim 8, wherein one or more collisions (220) in the paths (218) for the virtual robots (202) are removed.

10. The data processing system of claim 9, wherein the collisions (220) are removed by one or more of changing a configuration (208) of a virtual robot (202), rotating a location of a tool center point (TCP) (204) of the virtual robot (202) about a normal axis of the TCP (204), and adding one or more flyby positions through which the TCP (204) of the virtual robot (202) passes.

11. The data processing system according to any of the preceding system claims, wherein the path (218) for a virtual robot (202) is created via a work location (212) to which a tool center point (TCP) (204) of the virtual robot (202) is attached.

12. The data processing system of claim 11, wherein the work location (212) is transformed by one or more work object positions (214) so that the TCP (204) of the virtual robot (202) follows the work locations (212) along a path (218) that allows an actual robot corresponding to the virtual robot (202) to manipulate actual work objects corresponding to the virtual work objects (210).

13. The data processing system according to any of the preceding system claims,
wherein one or more parameters (226) including positions, locations, speeds, accelerations, motions, and rotations are provided from which instructions and commands of the programs (222) to control the actual robots are generated.

14. The data processing system according to any of the preceding system claims,
wherein the programs (222) are generated while the actual robots are offline.

15. A non-transitory computer-readable medium encoded with executable instructions that, when executed, cause one or more data processing systems (100) to perform a method according to any of the claims 1 to 7.
